# EUROPEAN PATENT APPLICATION

(11) **EP 1 592 245 A1**
(43) Date of publication of application: **02.11.2005**
(21) Application number: 04010022.4
(22) Date of filing: 27.04.2004
(51) Int. Cl.: H04N 7/01, H04N 5/06

(54) **Adaptive generation of synchronization signals**

(71) Applicant: MATSUSHITA ELECTRIC INDUSTRIAL CO., LTD., Kadoma-shi, Osaka 571-8501 (JP)
(72) Inventor: Grundmeyer, Michael, 55129 Mainz (DE); Janssen, Frank, 63225 Langen (DE)
(74) Representative: Grünecker, Kinkeldey, Stockmair & Schwanhäusser Anwaltssozietät

(57) **Abstract**

A method and a device for generating synchronization signals according to a predefined output timing standard and based on received synchronization signals is provided. Deviations of the timing of the received synchronization signals from a predefined input timing standard are detected, and the timing of the generated synchronization signals is adjusted based on the detected deviations.

## Description

The present invention relates to the adaptive generation of synchronization signals. Specifically, the present invention relates to the generation of synchronization signals employed in temporal frame rate converters and picture improvement circuits of television and multi-media display applications.

Temporal frame rate conversion has become an important issue in modern television sets. In particular, cathode ray tube (CRT) television sets often include a circuit which converts video signals from the original field rate of 50Hz of PAL or SECAM video signals or field rate of 60Hz of NTSC video signals to a higher frame rate in order to reduce area flicker effects. Received video signals of 50Hz are converted to temporal frame rates of 60Hz, 75Hz and 100Hz, etc. A 60Hz input video signal may be up-converted to frequencies like 72Hz, 80Hz and 120Hz..

Temporal frame rate conversion is usually performed by a digital signal processing chip-set which may further perform image size scaling and the de-interlacing of received interlaced video images. For example, a standard PAL video signal may be converted into frames of 1500*810 pixel at a frame rate of 75Hz.

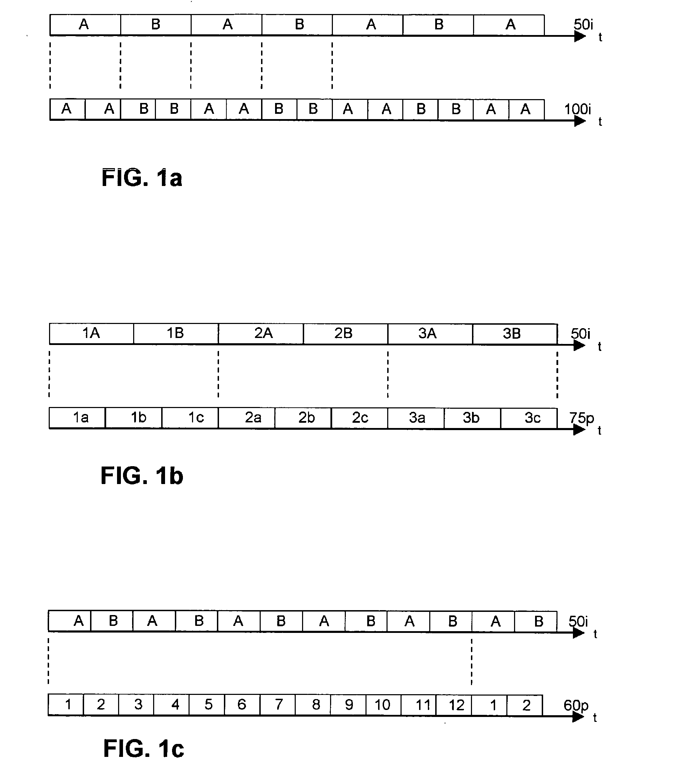

Temporal frame rate conversion requires the generation of intermediate images which reflect the video content at temporal positions different from that of the input video sequence. A temporal relation between received video images and images of an up-converted video signal is illustrated in Figs. 1 a, 1 b and 1 c for a received video signal having a field rate of 50Hz, such as a video signal according to the PAL standard.

As depicted in Fig. 1 a, a conversion of a 50Hz signal to a 100Hz interlaced video signal may be performed by repeating each received field. As is well known, more sophisticated techniques are also known in the art. Fig. 1 b illustrates a conversion into a 75Hz progressive video signal. In this case, subsequent pairs of input fields are converted into three frames of the converted video signal. Finally Fig. 1 c depicts a conversion between the interlaced 50Hz video signal to a progressive 60Hz video signal. As can be seen from this picture, a time period of 10 fields of the input video signal corresponds to a time period of 12 fields of the converted video signal.

In addition to generating the image content of the converted video signal, a new video time base of vertical and horizontal synchronization signals has to be generated in order to control the presentation of the converted video signal on a display.

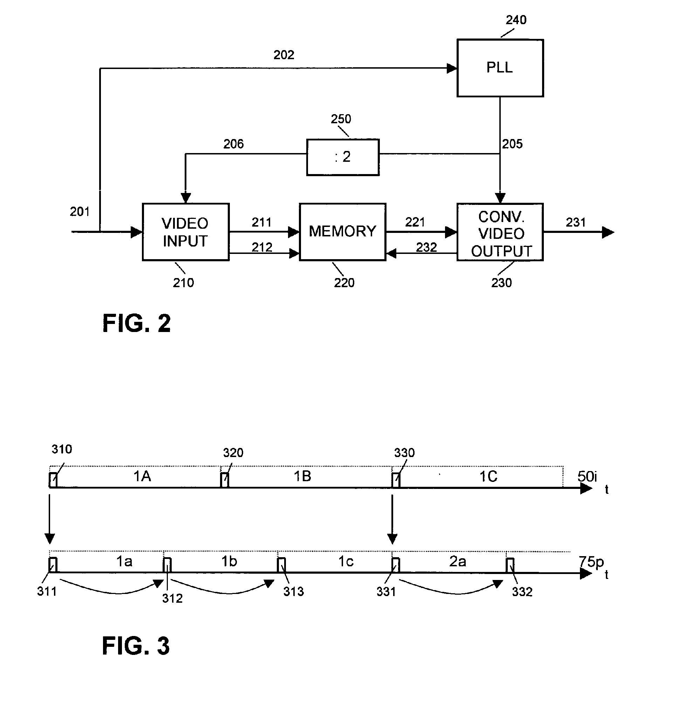

A conventional technique of generating synchronization signals for a converted video signal is illustrated in Fig. 3. Usually, a conversion frequency ratio between the original video signal and the converted video signal corresponds to a ratio of integer numbers. Thus, certain synchronization signals of the original video signal and the converted video signal may coincide in time. Conventional video conversion circuits make use of this relationship by triggering the generation of specific synchronization signals of the converted video signals 311, 331 by respective synchronization signals 310, 330 to the original video signal.

In the example shown in Fig. 3, which relates to a conversion of an interlaced 50Hz signal to a progressive 75Hz signal, every second vertical synchronization signal 310, 330 of the original video signal coincides with every third vertical synchronization signal 311 and 331 of the converted video signal. These vertical synchronization signals 311 and 331 are generated when corresponding vertical synchronization signals 310, 330 of the original video signal are received. Based on the time raster set by the triggered synchronization signals 311, 331, intermediate synchronization signals 312, 313, 332 are generated by the operation of a timer.

So far, only the generation of vertical synchronization signals has been described. In the same manner, horizontal synchronization signals may be generated, by triggering the generation of horizontal synchronization signals based on respective horizontal synchronization of the original video signal. A timer supplements horizontal synchronization signals which do not coincide with the timing of synchronization signals of the original video signal. Alternatively, it is possible to generate horizontal synchronization signals solely based on a timer operation within the time raster of triggered vertical synchronization signals 311, 331.

Fig. 2 outlines a circuit structure of a conventional up-conversion circuit which can perform the generation of synchronization signals as described above with reference to Fig. 3. In the illustrated circuit, a 50Hz to 100Hz up-conversion is performed. A similar video conversion circuit has been described in application note AN10233 titled "Scan conversion using the SAA4998 (FALCONIC EM)" available from Philips Semiconductors.

As illustrated in Fig. 2, a received video signal 201 is subjected to digital acquisition by video input circuit 210 and stored in memory 220. The horizontal synchronization signals 202 thereof are provided to a PLL stage 240 in order to generate an output pixel clock 205. The output pixel clock 205 is divided by two in frequency division circuit 250 in order to obtain acquisition pixel clock 206. A converted video output stage 230 generates the video images of the up-converted video signal 231 by accessing memory 220, and further generates synchronization signals for the converted video signal. These synchronization signals may be generated in the afore described manner by triggering certain of the generated synchronization signals based on input synchronization signals 202. Further intermediate synchronization signals are generated based on the output pixel clock signal 205.

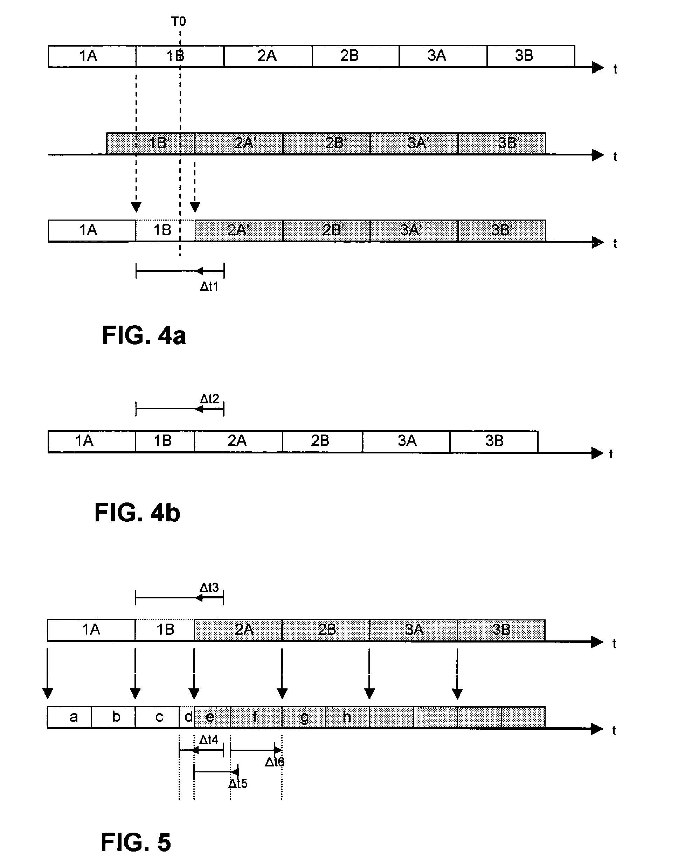

A drawback of the conventional approach of generating synchronization signals is that an error in the timing of synchronization signals of the original video signal results in uncontrolled and often substantial errors in the timing of the generated synchronization signals with respect to an output timing standard. Figs. 4a and 4b illustrate two possible causes of deviations of the received synchronization signals from a respective input timing standard. Fig. 5 depicts a reaction of a conventional synchronization signal generator on a timing error of received synchronization signals.

Fig. 4a illustrates the switching of video sources which may occur for instance in a digital receiver. At a time point T0, the video signal is switched from a first source 1 A, 1 B, 2A, ... to a second source 1B', 2A', 2B', ... . In the resultant video image sequence, a field 1 B is generated which is shorter by a time Δt1 than a standard field. In other cases, fields which are longer than a standard field may appear. Fig. 4b illustrates a timing error which is known from video signals of standard consumer grade video tape recorders (VCRs) in the search playback mode. At irregular intervals, a certain number of lines are missing in a field compared to a standard field. In the illustrated case, field 1 B is shorter by a time interval Δt2 than a standard field. Further, non-standard video signals may originate from entertainment devices such as video game consoles.

When such a non standard video sequence is supplied to a video conversion circuit, a succession of synchronization signals which substantially deviate from a pre-set output timing standard may be generated as illustrated in Fig. 5. Therein, field 1 B of the input video signal is shorter than a standard field by a deviation Δt3. The behaviour of a conventional conversion circuit is illustrated for a conversion from a 50Hz interlaced to 100Hz interlaced video signal. Applying the conventional synchronization signal generation technique to this example, every second vertical synchronization signal is generated by using the vertical synchronization signals of the input video signal as a trigger.

Accordingly, at the transition from input field 1 B to next input field 2A, the vertical synchronization signal indicating the beginning of input field 2A triggers a vertical synchronization signal indicating the transition from generated fields 'd' to 'e'. As can be seen from Fig. 5, synchronization signals which are generated for field 'd' substantially deviate from a pre-set output timing standard by an amount Δt4.

Based on a pixel clock signal generated by a PLL circuit from input synchronization signals, such as illustrated in Fig. 2, the next generated field 'e' will be provided with synchronization signals of higher frequency compared to the standard timing. Thus, the field 'e' will be shortened by a time Δt5 than a standard field. For the generation of synchronization signals for the next field 'f', the circuit will wait until receiving the respective trigger out of the input synchronization signals, such that the field 'f' is longer by a period Δt6 than a standard field.

While cathode ray tube displays usually follow such deviations and display at least a distorted image, modern digital displays such as LCD and Plasma flat panel displays do not accept a video signal which deviates substantially from a predetermined timing standard according to the device specification. On such digital displays, the screen turns blank until the generated video signal resumes the standard timing. Therefore, the conventional technique of generating synchronization signals for converted video signals performs unsatisfactory on digital displays since it produces blank screens during source switching or searching video scenes on a consumer grade VCR.

The described errors are particularly annoying when a conversion from a 50Hz video signal to a 60Hz progressive video signal is performed. This conversion type becomes more important since for digital displays, such as Plasma flat panel and LCD displays, a video frame frequency of 60Hz has been established as display standard. As shown in Fig 1 c, at this conversion ratio, a time period between the coincidence of vertical synchronization signals of the input video signal and the output video signal corresponds to a length of 10 input fields and 12 output fields. When a timing deviation of input synchronization signals occurs at the beginning of such a sequence, a rather long time passes until the next output synchronization signal is triggered. Therefore, a timing error will be apparent in the converted video signal for a long time.

There have been approaches of generating an output pixel clock and an input pixel clock by separate PLL circuits, wherein the PLL circuit for the output pixel clock has slow reaction speed, as for instance described in the above mentioned Philips Application Note. Accordingly, a more stable output pixel clock is generated. A similar approach is to generate the output pixel clock by a stable internal quartz oscillator. However, both these approaches cannot prevent the occurrence of synchronization signals which deviate uncontrollably and substantially from an output timing standard of a converted video signal in reaction to timing errors of the original video signal.

Another approach of a video conversion method is described in EP-0 775 421 B, wherein a video conversion circuit is operated in accordance with a stable reference synchronization signal. The reference synchronization signal corresponds to the temporal frame rate of the converted video signal. The video conversion circuit evaluates a phase difference between the reference synchronization signal and the synchronization signals of a received video signal in order to determine an interpolation ratio of original images to be applied to the generation of interpolated images.

It is a drawback of this approach, that a rather complicated processing is required to determine a current phase in real time. Further, this approach results in a high computation and hardware effort.

In view of above describe deficiencies of the conventional conversion techniques, it is an object of the present invention to provide an improved approach of generating synchronization signals based on received synchronization signals.

This object is achieved by the features of claim 1 for a synchronization signal generator and claim 24 for a method of generating synchronization signals.

According to a first aspect of the present invention, a synchronization signal generator is provided for generating synchronization signals according to a predefined output timing standard and based on received synchronization signals. The synchronization signal generator comprises detection means for detecting deviations of the timing of the received synchronization signals from a predefined input timing standard and a timing adjustment circuit for adjusting the timing of the generated synchronization signals based on the deviations detected by the detection means. Specifically, the synchronization signal generator of the present invention is provided for the generation of horizontal and vertical video synchronization signals.

According to another aspect of the present invention, a method for generating synchronization signals generates synchronization signals according to a predefined output timing standard based on received synchronization signals. According to this method, deviations of the timing of the received synchronization signals from a predefined output timing standard are detected and the timing of the generated synchronization signals is adjusted based on the deviations detected in the detection step. Specifically, the synchronization signal generation method of the present invention is provided for the generation of horizontal and vertical video synchronization signals.

It is the particular approach of the present invention to detect deviations of received synchronization signals. Based on the detection result, the timing of generated synchronization signals is adjusted to vary only slightly from an output timing standard in order to reflect the detected timing errors. In this manner, the generated synchronization signals are always essentially in accordance with the output timing standard and deviations of the generated synchronization signals from the output timing standard can be reliably controlled. The generated synchronization signals thus dependably drive digital display devices allowing only slight variations of input video signals from a specified standard. Such display applications include LCD and plasma flat panel displays. The synchronization signal generation scheme of the present invention is advantageously employed in a video conversion circuit performing a temporal frame rate conversion between a 50Hz interlaced to a 60Hz progressive video signal.

According to a preferred embodiment, the detection of a deviation of the received synchronization signals from a predefined input timing is performed by counting a first pixel clock signal such that time periods between received synchronization signals are measured in units of pixel clock counts. By utilising count values of a pixel clock, an efficient quantitative detection of deviations between the received synchronization signals and the input timing standard is achieved.

Preferably, the number of pixels is counted for the period of a predefined number of subsequent input images. In particular, the pixels may be counted for 1, 2 or 10 subsequent input fields.

According to another embodiment, the number of subsequent input images to be counted is pre-set such that a period of the number of subsequent input images according to the input timing standard corresponds to period of an integral number of subsequent output images according to the output timing standard. Thus, an image sequence of input images and corresponding output images is predefined, wherein coinciding vertical synchronization signals determine the start of each sequence. This allows a particular efficient determination of the timing adjustment of the generated synchronization signals.

According to a further embodiment, the timing of generated synchronization signals of a current output image is adjusted. In accordance therewith, a deviation in the received synchronization signals is promptly introduced to the generated synchronization signals.

In accordance with a preferred embodiment, the timing of generated synchronization signals is adjusted for a sequence of output images, wherein the number of images of the sequence is pre-set such that a period of the sequence according to the output timing standard corresponds to the period of the pre-set number of subsequent input images. Accordingly, the synchronization signal generating scheme of the present invention is carried out based on image sequences, which encompass a time interval between two coinciding vertical synchronization signals of received and generated synchronization signals. In this manner the operation of detecting a deviation and performing a respective adjustment is simplified.

In accordance with another preferred embodiment, the number of generated horizontal synchronization signals of the last image of the sequence of output images is adjusted in response to the number of counted pixels differing from the input timing standard. Thus, a current sequence of output synchronization signals maintains a standard timing raster up to the last frame of an output sequence.

According to another preferred embodiment, a detected deviation is distributed within the sequence of output images by adjusting the number of generated horizontal synchronization signals in all images of the sequence of output images. Accordingly, a deviation is distributed such that only a small variation between the generated synchronization signals and the output timing standard is caused. In particular, the generated synchronization signals are easily maintained within the timing specification of digital display devices such that an improved viewing experience is obtained when displaying converted video signals thereon.

Preferably, in addition to distributing deviations by adjusting a number of generated horizontal synchronization signals of all images of the sequence, a remaining deviation is distributed by adjusting the time interval between the successively generated horizontal synchronization signals for all lines of the sequence of output images. Accordingly, a detected deviation can be distributed in a more subtle manner such that a rejection of the generated signal by a digital display device is avoided.

Preferably, a deviation detected for a pre-set number of input images is completely introduced into a current or a following sequence of output images. Accordingly, a slight deviation of the output synchronization signals from the predetermined output timing standard only occurs within a limited time interval corresponding to at most one sequence. Further, with the beginning of a next sequence, all deviations have been accounted for, such that the generation of standard synchronization signals resumes.

According to another preferred embodiment, along with adjusting the timing of output synchronization signals, a sequence position signal is generated which indicates a current image position with respect to a sequence of output images. Such a sequence position signal efficiently controls a conversion processing. In particular, a conversion processing utilising pre-set interpolation ratios between a currently generated image and one or plural of received images can be efficiently controlled.

Preferably, the temporal position of the generated synchronization signals is determined by the process of performing the timing adjustment in accordance with a second pixel clock signal. Accordingly, the timing of the generated synchronization signals is reliably determined based on an independent pixel clock.

According to another preferred embodiment, the number of lines per field or frame is determined in order to control the synchronization signal generation.

Preferably, the number of pixels per line is determined for controlling the synchronization signal generation.

According to another preferred embodiment, the synchronization signal generation scheme of the present invention selects an adjustment operation out of the following three predefined operations of: (1) A detected deviation is introduced to the last image of a sequence of output images by adjusting the number of lines thereof. Remaining pixels are added to the last line. (2) A detected deviation is distributed among all images of a sequence for output images by adjusting the number of lines of all images of the sequence and remaining pixels are added to the last line of the last image. (3) A detected deviation is distributed among all images of a sequence of output images by adjusting the number of lines of all the images and a remaining amount of pixels is distributed among all lines of all images. Surplus pixels are added to the last line of the last image. Accordingly, the adjustment operation which appears most suitable for the detected deviation can be selected.

Preferably, the adjustment operation is selected based on a magnitude and a direction of the deviation. These two values provide easily and efficiently accessible criteria for performing the selection of an adjustment operation.

According to a further preferred embodiment of the present invention, an adjustment operation is selected such that a deviation between the timing of the generated synchronization signals and the output timing standard does not exceed a predefined deviation range. Accordingly, individual deviations of the generated synchronization signals due to the adjustment operation can be maintained within a predefined interval such that it is ensured that the generated signal is in accordance with pre-set device specifications of, for instance, an LCD display.

According to another preferred embodiment, the type and the temporal position of received synchronization signals is evaluated in order to select the adjustment operation. Thus, the type of signal error may be detected, enabling for instance discrimination between source switching and a VCR in search mode. An adjustment operation can be selected accordingly.

Preferably, a video conversion circuit for subjecting a video signal to temporal frame rate conversion comprises a synchronization signal generator in accordance with the present invention.

Further embodiments are the subject matter of dependent claims.

The above and other objects and features of the present invention will become more apparent from the following description given in conjunction with accompanying drawings, in which:
- Fig. 1a: illustrates a video conversion scheme of a 50Hz interlaced video signal into a 100Hz interlaced video signal;
- Fig. 1b: illustrates a video conversion scheme of a 50Hz interlaced video signal into a 75Hz progressive video signal;
- Fig. 1c: illustrates a video conversion scheme of a 50Hz interlaced video signal into a 60Hz progressive video signal;
- Fig. 2: is a schematic representation of a conventional video conversion circuit;
- Fig. 3: outlines a conventional synchronization signal generating scheme wherein synchronization signals for a 75Hz progressive video signal are generated from synchronization signals of a received 50Hz interlaced video signal;
- Fig. 4a: illustrates an error in the timing of a video signal due to source switching;
- Fig. 4b: illustrates a timing deviation of a video signal which is typically produced by consumer grade VCR in playback search mode;
- Fig. 5: outlines the behavior of a conventional video conversion technique provided with a video signal of non-standard timing;
- Fig. 6: is a schematic representation of a synchronization signal generator in accordance with the present invention;
- Fig. 7: depicts an exemplary configuration of a synchronization signal generator wherein a deviation is detected by a pixel counter in accordance with the present invention;
- Fig. 8: is a schematic representation of a video conversion circuit employing a synchronization signal generating scheme of the present invention;

- Fig.9: illustrates a synchronization signal generating scheme of the present invention for a case wherein a received video sequence is shorter than a standard video sequence;
- Fig.10: illustrates a synchronization signal generating scheme of the present invention for a case wherein a received video sequence is longer than a standard video sequence;
- Fig. 11: illustrates another synchronization signal generating scheme of the present invention wherein a deviation in a sequence of received video images is introduced to a simultaneously generated sequence of synchronization signals;
- Fig.12: illustrates a method of generating synchronization signals in accordance with the present invention;
- Fig. 13: illustrates an exemplary implementation of detecting a deviation in input synchronization signals in accordance with the present invention; and
- Fig. 14: depicts an exemplary implementation of adjusting a timing of generated synchronization signals in accordance with the present invention.

The present invention relates to the generation of synchronization signals based on received synchronization signals wherein a deviation in the timing of received synchronization signals with respect to an input timing standard is detected. The detected deviation is introduced to the timing of generated synchronization signals by adjusting the timing of the generated synchronization signals to vary only slightly from an output timing standard.

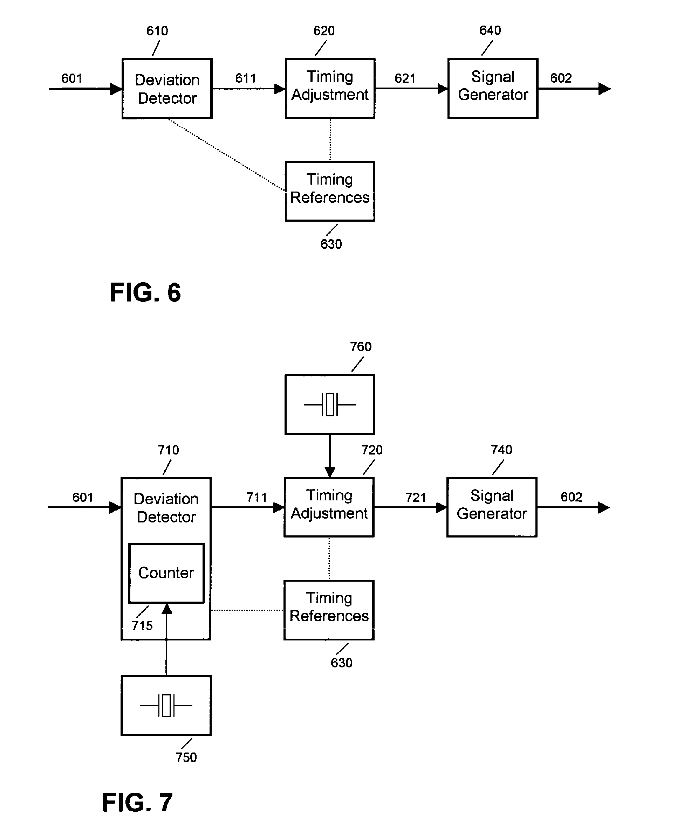

A synchronization signal generator for implementing the described synchronization signal generation scheme is illustrated in Fig. 6. A deviation detector 610 receives synchronization signals 601 and compares the timing of the received synchronization signals to an input timing standard. The input timing standard is provided by a timing reference means 630. The timing reference means may for example hold tables indicating standard time periods characteristic for the input timing standard. When a deviation between input synchronization signals 601 and the input timing standard occurs, deviation detector 610 detects the deviation and signals the deviation to a timing adjustment circuit 620. In accordance with an output timing standard, timing adjustment circuit 620 adjusts the timing of generated synchronization signals 602. According to the adjusted timing, a signal generator stage 640 generates synchronization signals 602. Similar to the input timing standard, timing reference means 630 provides the output timing standard.

Due to the provision of deviation detector 610, the present invention recognises whether or not a received synchronization signal is in accordance with an input timing standard. In contrast, prior art schemes do not compare the input synchronization signals to a standard timing and thus allow the generation of synchronization signals deviating substantially from an output timing standard.

According to the present invention, the timing of the generated synchronization signals is adjusted to deviate from an output timing standard in a deterministic manner, such that the deviations can be reliably controlled. Thus, the generated synchronization signals are always essentially in accordance with the output timing standard and maintain a continuous frame raster. The generated synchronization signals thus dependably drive digital display devices allowing only slight variations of input video signals from a specified standard.

The synchronization signal generator of the present invention is efficiently employed for generating the synchronization signals of video signals which have undergone a temporal frame rate conversion. In particular in applications requiring an up-conversion from a 50Hz interlaced video signal to a 60Hz progressive video signal, the present invention generates synchronization signals of improved timing quality.

The present invention is also advantageously employed in applications wherein synchronization signals of video signals are restored by receiving possibly distorted synchronization signals from a video source and generating a new synchronization signal at the same temporal frame rate.

The synchronization signal generator of the present invention may receive synchronization signals according to any of PAL, SECAM or NTSC video standards, among others.

The generated synchronization signals may relate to high-definition television standards, such as HDTV. Image rates corresponding to the generated synchronization signals include 60Hz progressive video signals, 75Hz progressive, 100Hz interlaced and 120Hz interlaced video signals.

In the following, both fields and frames of video signals will be denoted as video images.

Referring now to Fig. 7, an exemplary configuration of the synchronization signal generator of the present invention is described in more detail. Received synchronization signals are provided to a deviation detector 710 which detects a deviation between the timing of received synchronization signals and an input timing standard by counting the clock signals of a first pixel clock 750.

The pixel clock generation 750 may be implemented as a quartz oscillator stage. A counter 715 of deviation detector 710 is reset and restarted after receiving specific synchronization signals. When counter 715 is reset, the count value is evaluated. Thus, a time period between specific synchronization signals is measured in units of pixel clock counts. The pixel clock count value corresponding to a measured time period is compared with an expected value corresponding to a time period determined by the input timing standard.

In a specific implementation, counter 715 counts pixel clocks signals for a period corresponding to a predefined number of subsequent input images to which the received synchronization signals are related. In this case, the reset condition of the counter includes synchronization signals which indicate a new video image such that the counter counts the pixel clock signals for an integral number of subsequent input images.

Deviation detector 710 provides a deviation signal 711 to the timing adjustment circuit 720. The deviation signal includes the direction of the deviation, which indicates whether fewer or excess pixels in comparison to an expected count value according to the input timing standard have been counted. The deviation signal further includes the difference between the expected pixel count value and the measured pixel count value.

In accordance with this deviation signal, timing adjustment circuit 720 adjusts the timing of the generated synchronization signals. For this purpose, the timing adjustment circuit signals the temporal position of synchronization signals to synchronization signal generator 740, which then generates the actual signal wave-form of respective synchronization signals.

Timing adjustment circuit 720 is operated based on a clock reference from a second pixel clock 760 preferably relating to the pixel clock of output images of a video conversion circuit. The second pixel clock is generated by a quartz oscillator. The second pixel clock signal may for instance be obtained from a display driving stage of a temporal frame rate converter.

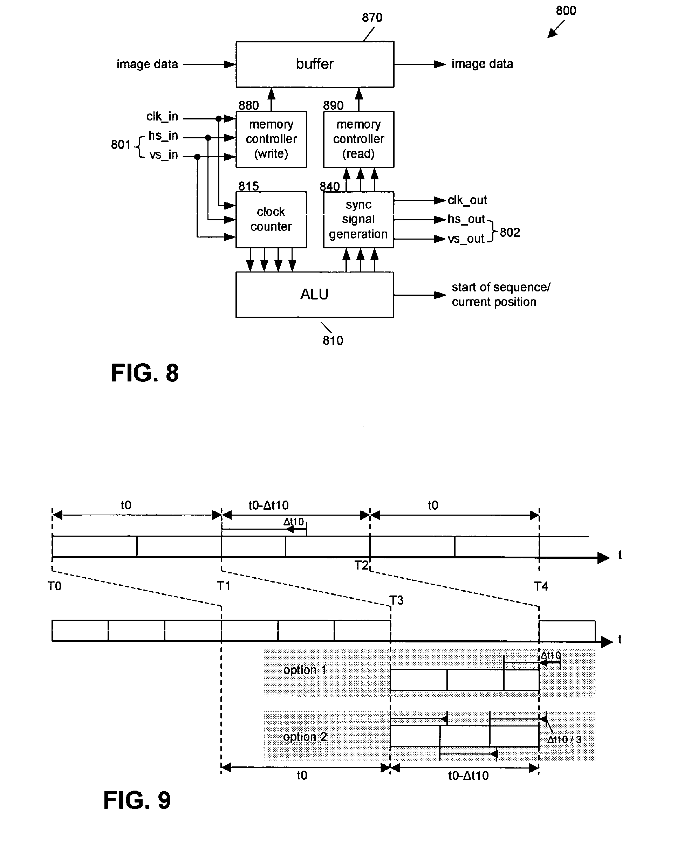

Fig. 9, Fig. 10 and Fig. 11 illustrate examples for the timing adjustment processing of the present invention carried out by synchronization signal generators illustrated in any of Figs. 6 or 7. In these particular examples, a temporal frame rate conversion from a 50Hz interlaced video signal to a 75Hz progressive video signal has been chosen. However, the depicted operation modes are applicable to any other temporal frame rate conversion ratios.

In general, it should be noted that although in the following, the received and the generated synchronization signals are described in terms of images, fields, frames, lines and pixels, the timing adjustment of the present invention only relates to adjusting the number and temporal position of synchronization signals. The terms images, fields, frames, lines, pixels, etc. are used in order to facilitate the understanding of the adjustment operation and should always be understood as reference to corresponding synchronizations signals. The timing adjustment need not take consideration of the video image content produced in the conversion process wherein the synchronization signal generation scheme of the present invention may be employed. In particular, the generation of video image content which includes errors due to the non-standard input video images may be tolerated.

All the illustrated examples essentially detect deviations of the timing of received synchronization signals based on sequences of input images and perform the timing adjustment of generated synchronization signals based on sequences of output images. A sequence of a number of successive input or output images, respectively, is defined in such a manner that the number of successive input images and the number of successive output images correspond to an equal time period. The image numbers are integer numbers. Input images correspond to images of an original video signal and output images correspond to images of a converted video signal. In analogy to the definition of a sequence of images, a sequence of received synchronization signals and a sequence of generated synchronization signals correspond to an equal time period. In particular, vertical synchronization signals, indicating the beginning of a sequence may coincide for a sequence of received synchronization signals and a sequence of generated synchronization signals.

As apparent from above description, the length of a sequence is predetermined by the conversion ratio. When synchronization signals are generated for a conversion from a 50Hz interlaced signal to a 60Hz progressive signal, an input sequence corresponds to 10 subsequent fields and an output sequence encompasses 12 frames. In the case of a conversion from 50Hz interlaced to 75Hz progressive, a sequence of received synchronization signals corresponds to two fields while at the same time synchronization signals for three output frames are generated. The skilled person will easily determine sequence numbers for other conversion ratios.

According to the timing adjustment processing illustrated in Fig. 9, a time period t0 corresponding to a sequence of input images is measured and evaluated. In the illustrated example, this time period corresponds to 2 input fields and 3 output frames. For each successive sequence, the input pixel clock is counted and a deviation from an expected count value is detected.

As depicted in Fig. 9, an input sequence received in a time interval T1 - T2 deviates from an expected time period t0 according to an input timing standard by a deviation time Δt10. In this case, the first field of the input image sequence T1 - T2 is shorter than defined by the input timing standard.

Adjustment of the timing of generated synchronization signals is carried out so that the generated synchronization signals of a currently generated sequence which has started at the same time T1 as the input sequence for which the deviation has been detected, is finished in exact compliance with the output timing standard. The next sequence of generated synchronization signals between the time interval T3 and T4 is adjusted in its timing such that the detected time deviation Δt10 is introduced into this sequence of generated synchronization signals. Thus, the sequence of generated synchronization signals in the time interval T3 - T4 has the same length t0 - Δt10 as the input image sequence for which the deviation has been detected. Accordingly, at time point T4, the start of the sequence of input images and of output images again coincide.

For the adjustment of the generated synchronization signals in time interval T3 - T4, different adjustment operation options may be implemented. According to a first adjustment option, the detected deviation Δt10 is applied only to the last image of the sequence of output images to be adjusted. The adjustment is performed by reducing the number of lines of the last image of the sequence of output images. This means, that the number of horizontal synchronization signals of the last image is reduced. Remaining pixels, which do not add up to a whole line form the last line of the last image of the output sequence.

In accordance with a second option for performing the adjustment, the detected deviation Δt10 is distributed uniformly to the generated synchronization signals of the output sequence. The adjustment includes reducing the number of lines in all images of the sequence. In addition, the number of pixels per line may be reduced, such that the time interval between two successive horizontal synchronization signals is shorter. In accordance with the above-described adjustment operation option, individual deviations of the generated synchronization signals from an output timing standard are much lower as according to the above-described first option. Therefore, the second option is preferred for applications which require output synchronization signals deviating as little as possible from a predetermined timing standard specification. Such applications include the signal generation for digital displays such as LCD screens and plasma flat panel displays.

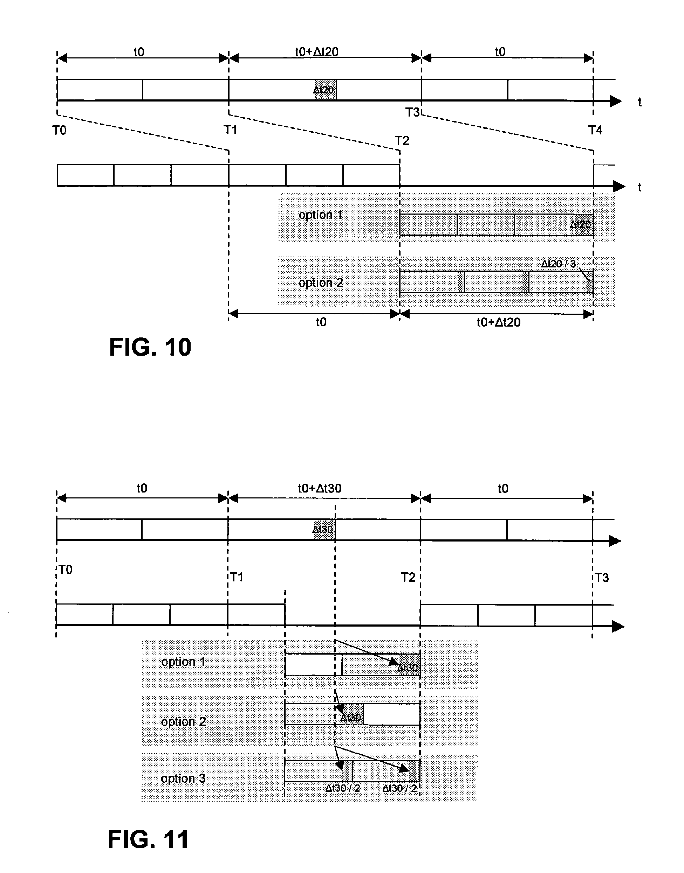

The example for the timing adjustment operation depicted in Fig. 10 differs from the adjustment processing described by reference to Fig. 9 in that a received sequence of synchronization signals requires a longer time period than defined by the input timing standard.

As illustrated in Fig. 10, a sequence of input images requires a time t0+Δt20 instead of an expected time t0 in time interval T1 - T3. The detected deviation Δt20 is introduced to a sequence of generated synchronization signals T2 - T4 which succeeds the sequence of generated synchronization signals T1 - T2 starting at the same time T1 as the sequence of received signals deviating from the input timing standard.

In a manner similar to the operation described in Fig. 9, the detected deviation Δt20 is either added to the last frame of the sequence of output images in accordance with a first adjustment option or is uniformly distributed among the frames of the output image sequence in accordance with the second adjustment option. In consequence, at a time T4 vertical synchronization signals starting another sequence of received and generated synchronization signals again coincide.

In accordance with the first adjustment option, additional horizontal synchronization signals corresponding to lines of an output image sequence are added to the last frame. Any remaining pixels may be added to form the last line. In accordance with the second adjustment option, a deviation is distributed by adding the same number of lines to each frame of the output image sequence. In addition, the number of pixels per line may be increased, such that the time interval between two successive horizontal synchronization signals is longer.

When only a small amount of deviation has been detected, this deviation may be introduced to the generated synchronizing signals relating to the last image of an output image sequence. However, when a larger deviation is detected, this deviation is advantageously distributed to plural images such that individual deviations of the generated synchronization signals from an output timing standard are small.

As shown in Fig. 11, it is further possible to detect timing deviations already within a sequence of input images which is not yet completely received, for example by detecting a deviation after each received vertical synchronization signal. In accordance therewith, it is possible to adjust the timing of a sequence of generated synchronization signals starting at the same time point T1 as a sequence of received signals without awaiting the completion of the received sequence.

According to the illustrated example, a deviation Δt30 occurs in a first image of the received sequence T1 - T2 and is detected by evaluating the periods of the respective fields of the input sequence. Referring to exemplary options 1 and 2 in Fig. 11, the detected deviation is applied to one of the images of the output image sequence following the input image for which the deviation has been detected. According to a third option in Fig. 11 the detected deviation is distributed among the remaining output images. As already described in the above implementations, the timing adjustment is carried out by adding or subtracting lines (i.e. horizontal synchronization signals) or by adjusting the number of pixels per line.

A configuration of a temporal frame rate converter performing the generation of synchronization signals in accordance with the present invention is illustrated in Fig. 8. This temporal frame rate converter may perform any of the above described timing adjustment operations.

Temporal frame rate converter 800 is provided with a buffer 870 for storing input image data and for reading image data to be supplied as a converted video signal. The acquisition of received image data is controlled by a memory controller 880 which receives horizontal and vertical synchronization signals 801 of the received video signal and an input pixel clock. The synchronization signals and the input pixel clock are further supplied to clock counter 815 which counts pixel clock signals corresponding to a specific number of input images. Clock counter 815 counts the pixels for each sequence of input images. A received synchronization signal which indicates the start of the next sequence causes the count value to be evaluated and the counter to be reset.

The count value is provided to arithmetic logic unit ALU 810 to be compared with an expected count value according to an input timing standard. In accordance with the detected deviation, ALU 810 determines an adjustment of generated synchronization signals for a sequence of output images. For this purpose, ALU 810 calculates the temporal positions at which horizontal and vertical synchronization signals 802 are to be generated and provides respective signals to synchronization signal generation circuit 840. This circuit generates the actual wave-form of synchronization signals 802 and outputs the generated synchronization signals together with an output pixel clock. The generated synchronization signals 802 and the output pixel clock are further provided to a read memory controller 890 in order to control the generation of the converted video signal.

The ALU further provides a 'start of sequence' signal and the current sequence position in order to control the conversion process. The sequence position indicates a current image within a sequence of output images. An efficient method of generating the sequence position signal is to increment a sequence position counter each time the generated synchronization signals indicate a new image, usually a concurrent generation of a vertical and a horizontal synchronization signal. A reset of the sequence position to zero indicates the start of a new sequence of output images. The conversion processing utilises the sequence position in order to determine an image interpolation ratio between an output video image and one or plural input video images. In this manner, an efficient control of the conversion processing is achieved.

ALU 810 internally determines the number of lines per image and the number of pixels per lines of the output sequence in order to control the generation of the horizontal and vertical synchronization signals 802.

In addition to the pixel clock count value, ALU 810 may be provided with the received horizontal and vertical synchronizations signals. Based on these signals the ALU determines a type of deviation. By determining whether of not horizontal synchronization signals and/or vertical synchronization signals have a period in accordance with the input timing standard, timing errors caused by a VCR in search mode and errors caused by source switching may be discriminated. Accordingly, an appropriate adjustment processing of generated synchronization signals is selected.

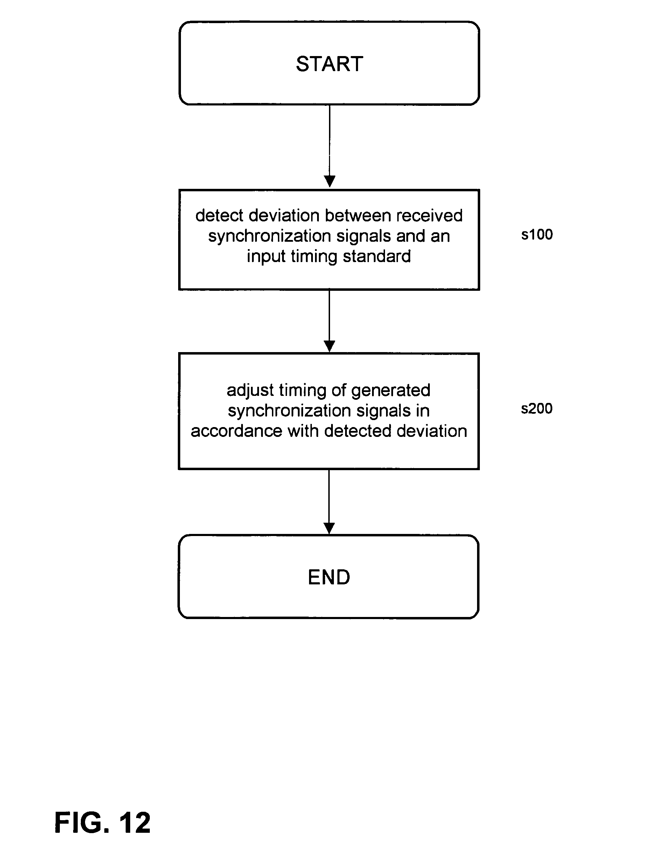

A method for generating synchronization signals in accordance with a predefined output timing standard and based on received synchronization signals is described in Fig. 12. In a first step s100 a deviation between the received synchronization signals and an input timing standard is detected. In a second step s200, the timing of generated synchronization signals is adjusted in accordance with the detected deviation.

Accordingly, the described synchronization signal generation method of the present invention provides generated synchronization signals which reflect a deviation of received synchronization signals. However, a deviation in the received synchronization signal does not result in a substantial error in the generation of output synchronization signals. In contrast, the described method generates synchronization signals essentially in accordance with an output timing standard, wherein the timing of the generated synchronization signals can be reliably controlled. In this manner, the generated synchronization signals provide an improved display control for applications requiring a stable signal input, such as digital displays including LCD screens and plasma flat panel screens.

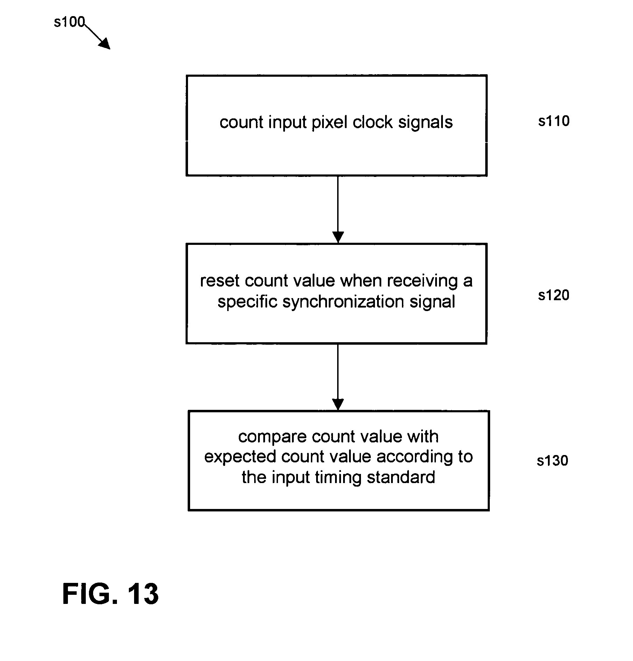

An exemplary implementation of detection step s100 is now described in more detail while referring to Fig. 13. According to this implementation, at a first sub-step s110 the clock signals of an input pixel clock are counted. In a further sub-step s120, the counter value is re-set when a specific synchronization signal is received.

In this manner, the pixel clock signals are counted for a time period between two specific synchronization signals. For instance, by counting the pixel clock signals between two successive vertical synchronization signals, a pixel clock count is obtained for a time interval corresponding to a received field or frame. In accordance with the above-described operation modes, the time interval for a sequence of received vertical synchronization signals is counted. The number of images is predetermined in accordance with a conversion ratio between received synchronization signals and generated synchronization signals.

In a further sub-step s130, the count value for the time interval between the specific synchronization signals is compared with an expected count value in accordance with the input timing standard. In this manner, a deviation between the received synchronization signals and the input timing standard is determined in units of pixel clock count values. Thus a deviation can be quantitatively determined in an efficient operation.

In the above-described operation modes (cf. Figs. 9, 10, 11), the number of pixels counted for a sequence of received synchronization signals is compared to the expected pixel clock count according to the input timing standard. A difference between the expected count value and the actual count value specifies a deviation value which is utilized in order to control the adjustment of the timing of the generated synchronization signals.

The described implementation of the deviation detection step s100 may be efficiently implemented in any kind of programmable logic circuit, such as a programmable digital signal processor or a field programmable gate array (FPGA).

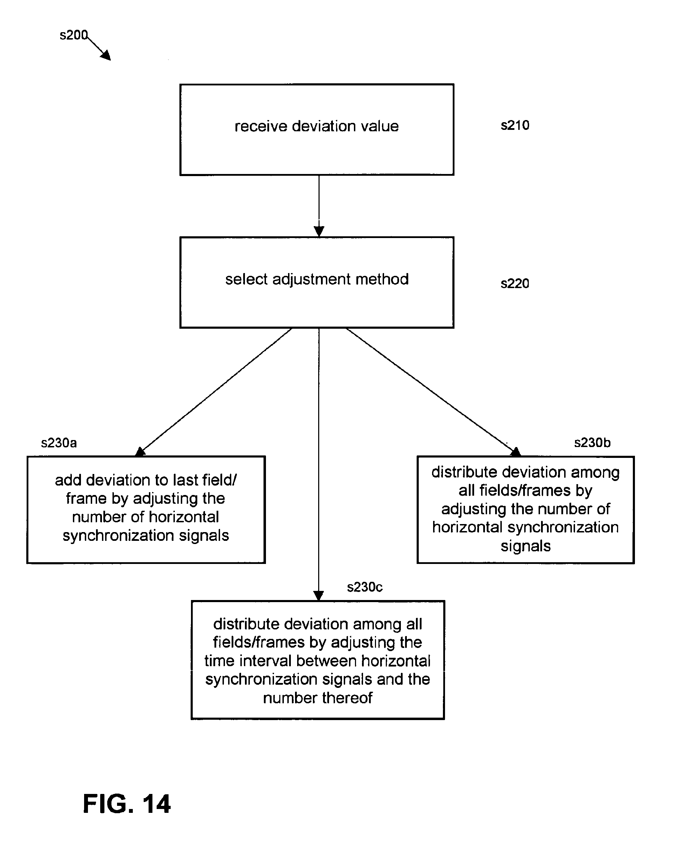

An exemplary implementation of step s200 of adjusting the timing of generated synchronization signals is described while referring to Fig. 14. In a first sub-step s210, a value specifying the detected deviation is received. In accordance with the received deviation value, in a sub-step s220, an adjustment method for performing the adjustment of the timing is selected.

The selection of the adjustment method is efficiently carried out taking at least the magnitude of the deviation into account. In addition, the direction of the detected deviation may be used as a selection criteria. A suitable timing adjustment method is selected in such a manner that a deviation between the timing of the generated synchronization signals and an output timing standard does not exceed a predefined deviation range. Accordingly, synchronization signals of improved timing quality are generated which are advantageously employed to drive display application which require a very stable input signal such as LCD and plasma flat panel displays.

Alternatively, the selection of an adjustment method may be carried out by detecting a type of deviation. According to this alternative, the temporal position of each received horizontal and vertical synchronization signal is evaluated. Based on this evaluation, it is for example possible to discriminate whether an error in an input video signal results from source switching or from a consumer grade VCR in search mode. In particular, it is possible to determine whether an input image deviates from the input timing standard in that an integral number of lines is missing or is added to the respective field. It can further be determined whether or not specific lines have a larger or smaller number of pixels. In accordance with this discrimination, an appropriate adjustment method is selected.

Considerations which adjustment method is selected in order to render timing deviations in the generated synchronization signals as unobjectionable as possible, will be discussed when describing the individual adjustment methods. At least one of the adjustment methods described in the following should be available for selection. Preferably, it is possible to select between any of the described adjustment methods.

According to a first adjustment method, illustrated by step s230a, a detected deviation is introduced to the last image of a sequence of generated synchronization signals. Corresponding to the deviation value, the number of horizontal synchronization signals, representing lines of the last image is increased or decreased. An excess number of pixels is added as a last (shorter) line.

This adjustment method is selected, if the deviation does not exceed a specific value, such that the deviation detected for a sequence of received images can be introduced to the last image of a sequence of generated horizontal signals without deviating from the output timing standard by more than a predefined deviation range. If the deviation of the received synchronization signals would lead to deviation larger than the predefined deviation range for generated synchronization signals, another adjustment method is selected.

In accordance with the second adjustment method, illustrated by step s230b, the detected deviation is distributed among all images of a sequence of output synchronization signals. The number of lines of all images of the output sequence is adjusted to distribute the deviation, such that all fields/frames have the same number of lines. Remaining pixels form the last line of the last field. This line can be shorter than a standard line.

According to this method, it is possible to distribute a larger deviation among plural images of a sequence of generated synchronization signals. Moreover, a deviation of the generated synchronization signals from the output timing standard can be kept within a pre-set deviation range. This adjustment method is particularly advantageous for processing errors in received synchronization signals in which an integral number of lines is missing in input fields, such as caused by a VCR in search mode. According to the number of lines missing in a received sequence of synchronization signals, the number of lines in the generated synchronization signals are adjusted to result in the least objectionable deviation of the generated synchronization signals from the output timing standard.

If a detected deviation is of such a magnitude, that a timing adjustment in accordance with the second adjustment method would result in a deviation of individual generated synchronization signals by more than a pre-set deviation range, a third adjustment method is selected.

According to this adjustment method, illustrated by step s230c, a detected deviation is distributed among all images of a sequence of generated synchronization signals. The detected deviation is distributed by adjusting the number of the generated horizontal synchronization signals corresponding to lines in all images of an output sequence and, in addition, the number of pixels per line is adjusted in order to distribute remaining pixels. A remainder of pixels which may not be evenly distributed among all lines of the output sequence forms a last line of the last field.

According to this method, an even larger deviation may be distributed among the output fields/frames without the generated synchronization signals deviating from an output timing standard by more than a pre-set deviation range. This deviation range may include an interval specifying the number of lines per field/frame and an interval specifying the number of pixels per line. Thus, even deviations of large magnitude may be distributed among generated synchronization signals while observing predetermined deviation limits.

The described implementation of the timing adjusting step s200 may be efficiently implemented in any kind of programmable logic circuit, such as a programmable digital signal processor or a field programmable gate array (FPGA).

Summarizing, the present invention provides a synchronization signal generation scheme for generating synchronization signals in accordance with a predefined output timing standard and based on received synchronization signals. A deviation of the timing of the received synchronization signals from a predefined input timing standard is detected, and the timing of the generated synchronization signals is adjusted based on the detected deviations.

Accordingly, a deviation in the timing of received synchronization signals is introduced into the generated synchronization signals in such a manner that the generated synchronization signals are always essentially in accordance with the output timing standard and deviations of the generated synchronization signals from the output timing standard can be reliably controlled. The generated synchronization signals thus dependably drive digital display devices allowing only slight variations of input video signals from a specified standard. Such display applications include LCD and plasma flat panel displays. The occurrence of substantial errors in the timing of generated synchronization signals which is a drawback of prior art synchronization signal generating schemes is avoided.

## Claims

1. A synchronization signal generator for generating synchronization signals (602) according to a predefined output timing standard based on received synchronization signals (601), wherein said received synchronization signals (601) and said generated synchronization signals (602) include horizontal and vertical video synchronization signals, said synchronization signal generator comprising:
a detection means (610, 710) for detecting deviations of the timing of said received synchronization signals (601) from a predefined input timing standard, and
a timing adjustment circuit (620, 720) for adjusting the timing of said generated synchronization signals (602) based on said deviations detected by said detection means (610, 710).

2. A synchronization signal generator in accordance with claim 1, wherein said detection means (710, 810) comprises a counter (715, 815) for counting a first pixel clock signal in order to measure time periods between received synchronization signals (601, 801) in units of pixel clock count values.

3. A synchronization signal generator in accordance with claim 2, wherein said counter (715, 815) counts the number of pixels for a period of a predefined number of subsequent input images.

4. A synchronization signal generator in accordance with claim 3, wherein said period corresponds to one or two subsequent input fields.

5. A synchronization signal generator in accordance with claim 3, wherein said period corresponds to ten subsequent input fields.

6. A synchronization signal generator in accordance with claim 3, wherein said number of subsequent input images is pre-set such that a period (t0) of said number of subsequent input images according to said input timing standard corresponds to a period (t0) of an integral number of subsequent output images according to said output timing standard.

7. A synchronization signal generator in accordance with any of claims 1 to 6, wherein said timing adjustment circuit (620, 720, 810) adjusts the timing of generated synchronization signals (602, 802) of a current output image.

8. A synchronization signal generator in accordance with claim 6, wherein said timing adjustment circuit (620, 720, 810) adjusts the timing of generated synchronization signals (602, 802) of a sequence of output images, wherein the number of images of said sequence is pre-set such that a period (t0) of said sequence in accordance with said output timing standard corresponds to said period (t0) of said pre-set number of subsequent input images.

9. A synchronization signal generator in accordance with claim 8, wherein said timing adjustment circuit (620, 720, 810) increases the number of generated horizontal synchronization signals of the last image of said sequence of output images in response to the number of counted pixels being higher than designated by said input timing standard.

10. A synchronization signal generator in accordance with claim 8, wherein said timing adjustment circuit (620, 720, 810) decreases the number of generated horizontal synchronization signals of the last image of said sequence of output images in response to the number of counted pixels being lower than designated by said input timing standard.

11. A synchronization signal generator in accordance with claim 8, wherein said timing adjustment circuit (620, 720, 810) distributes a deviation in the number of counted pixels by adjusting the number of generated horizontal synchronization signals in all images of said sequence of output images.

12. A synchronization signal generator in accordance with claim 11, wherein said timing adjustment circuit (620, 720, 810) further adjusts the time interval between successively generated horizontal synchronization signals for all lines of said sequence of output images.

13. A synchronization signal generator in accordance with any of claims 8 to 12, wherein said timing adjustment circuit (620, 720, 810) completely introduces a deviation (Δt10, Δt20, Δt30) detected for said pre-set number of input images into a current or a following sequence of output images.

14. A synchronization signal generator in accordance with any of claims 8 to 13, wherein said timing adjustment circuit (620, 720, 810) further generates a sequence position signal indicating a current image position with respect to a sequence of output images.

15. A synchronization signal generator in accordance with any of claims 1 to 14, wherein said timing adjustment circuit (720, 810) determines the temporal position of said generated synchronization signals (602, 802) in accordance with a second pixel clock signal.

16. A synchronization signal generator in accordance with any of claims 1 to 15, wherein said timing adjustment circuit (620, 720, 810) determines a number of lines per field or frame in order to control the synchronization signal generation.

17. A synchronization signal generator in accordance with any of claims 1 to 16, wherein said timing adjustment circuit (620, 720, 810) determines a number of pixels per line in order to control the synchronization signal generation.

18. A synchronization signal generator in accordance with any of claims 8 to 17, wherein said timing adjustment circuit (620, 720, 810) selects an adjustment operation out of the following predefined operations of:
(i) introducing a detected deviation to the last image of a sequence of output images by adjusting the number of lines thereof, adding remaining pixels to the last line,
(ii) distributing a detected deviation among all images of a sequence of output images by adjusting the number of lines of all said images, adding remaining pixels to the last line of the last image, or
(iii) distributing a detected deviation among all images of a sequence of output images by adjusting the number of lines of all said images and distributing a remaining amount of pixels among all lines of all said images, adding surplus pixels to the last line of the last image.

19. A synchronization signal generator in accordance with claim 18, wherein said adjustment operation is selected based on the magnitude and/or direction of the deviation.

20. A synchronization signal generator in accordance with claim 19, wherein said adjustment operation is selected such that a deviation between the timing of said generated synchronization signals and said output timing standard does not exceed a predefined deviation range.

21. A synchronization signal generator in accordance with claim 18, wherein said timing adjustment circuit (620, 720, 810) evaluates the type and time of received synchronization signals in order to select said adjustment operation.

22. A video conversion circuit for subjecting a video signal to a temporal frame rate conversion, comprising the synchronization signal generator in accordance with any of claims 1 to 21.

23. A method for generating synchronization signals according to a predefined output timing standard based on received synchronization signals, wherein said received synchronization signals and said generated synchronization signals include horizontal and vertical video synchronization signals, comprising the following steps of:
detecting (s100) deviations of the timing of said received synchronization signals from a predefined input timing standard, and
adjusting (s200) the timing of said generated synchronization signals based on said deviations detected by said detection step (s100).

24. A method in accordance with claim 23, wherein said detection step (s100) comprises the step of counting (s110) a first pixel clock signal in order to measure time periods between received synchronization signals in units of pixel clock count values.

25. A method in accordance with claim 24, wherein said detection step (s100) further comprises the step of resetting (s120) a count value of said first pixel clock signal upon receiving a specific synchronization signal.

26. A method in accordance with claim 25, wherein said number of pixels is counted for a period of a predefined number of subsequent input images.

27. A method in accordance with claim 26, wherein said period corresponds to one or two subsequent input fields.

28. A method in accordance with claim 26, wherein said period corresponds to ten subsequent input fields.

29. A method in accordance with claim 26, wherein said number of subsequent input images is pre-set such that a period (t0) of said predefined number of subsequent input images according to said input timing standard corresponds to a period (t0) of an integral number of subsequent output images according to said output timing standard.

30. A method in accordance with any of claims 23 to 29, wherein said step of adjusting (s200) the timing adjusts the timing of generated synchronization signals (602, 802) of a current output image.

31. A method in accordance with claim 29, wherein said step of adjusting (s200) the timing adjusts the timing of generated synchronization signals of a sequence of output images, wherein the number of images of said sequence is pre-set such that a period (t0) of said sequence in accordance with said output timing standard corresponds to said period (t0) of said pre-set number of subsequent input images.

32. A method in accordance with claim 31, wherein said step of adjusting (s200) the timing adjusts (s230a) the number of generated horizontal synchronization signals of the last image of said sequence of output images in response to the number of counted pixels differing from said input timing standard.

33. A method in accordance with claim 31, wherein said step of adjusting (s200) the timing distributes (s230b) a deviation in the number of counted pixels by adjusting the number of generated horizontal synchronization signals in all images of said sequence of output images.

34. A method in accordance with claim 33, wherein said step of adjusting (s200) the timing further adjusts the time interval between successively generated horizontal synchronization signals for all lines of said sequence of output images.

35. A method in accordance with any of claims 31 to 34, wherein said step of adjusting (s200) the timing completely introduces a deviation (Δt10, Δt20, Δt30) detected for said pre-set number of input images into a current or a following sequence of output images.

36. A method in accordance with any of claims 31 to 35, further comprising the step of generating a sequence position signal indicating a current image position with respect to a sequence of output images.

37. A method in accordance with any of claims 23 to 36, wherein said step of adjusting (s200) the timing determines the temporal position of said output synchronization signals in accordance with a second pixel clock signal.

38. A method in accordance with any of claims 23 to 37, wherein said step of adjusting (s200) the timing determines a number of lines per field or frame in order to control the synchronization signal generation.

39. A method in accordance with any of claims 23 to 38, wherein said step of adjusting (s200) the timing determines a number of pixels per line in order to control the synchronization signal generation.

40. A method in accordance with any of claims 31 to 39, wherein said step of adjusting (s200) the timing includes the step of selecting (s220) an adjustment operation out of the following predefined operations of:
(i) introducing (s230a) a detected deviation to the last image of a sequence of output images by adjusting the number of lines thereof, adding remaining pixels to the last line,
(ii) distributing (s230b) a detected deviation among all images of a sequence of output images by adjusting the number of lines of all said images, adding remaining pixels to the last line of the last image, or
(iii) distributing (s230c) a detected deviation among all images of a sequence of output images by adjusting the number of lines of all said images and distributing a remaining amount of pixels among all lines of all said images, adding surplus pixels to the last line of the last image.

41. A method in accordance with claim 40, wherein said adjustment operation is selected based on the magnitude and/or direction of the deviation.

42. A method in accordance with claim 41, wherein said adjustment operation is selected such that a deviation between the timing of said generated synchronization signals and said output timing standard does not exceed a predefined deviation range.

43. A method in accordance with claim 40, wherein said step of adjusting (s200) the timing further comprises the step of evaluating the type and time of received synchronization signals in order to select an adjustment operation.

44. A method for subjecting a video signal to a temporal frame rate conversion, comprising the method for generating synchronization signals in accordance with any of claims 23 to 43.

## Amended claims

### Amended claims in accordance with Rule 86(2) EPC.

**1.** A synchronization signal generator for generating synchronization signals (602) according to a predefined output timing standard based on received synchronization signals (601), wherein said received synchronization signals (601) and said generated synchronization signals (602) include horizontal and vertical video synchronization signals, said synchronization signal generator comprising a timing adjustment circuit (620, 720) for adjusting the timing of said generated synchronization signals (602), **characterized by**
a detection means (610, 710) for detecting deviations of the timing of said received synchronization signals (601) from a predefined input timing standard, and
in that said timing adjustment circuit (620, 720) adjusting said timing of said generated synchronization signals (602) based on said deviations of the timing of said received synchronization signals (601) from said predefined input timing standard detected by said detection means (610, 710).

**2.** A synchronization signal generator in accordance with claim 1, wherein said detection means (710, 810) comprises a counter (715, 815) for counting a first pixel clock signal in order to measure time periods between received synchronization signals (601, 801) in units of pixel clock count values.

**3.** A synchronization signal generator in accordance with claim 2, wherein said counter (715, 815) counts the number of pixels for a period of a predefined number of subsequent input images.

**4.** A synchronization signal generator in accordance with claim 3, wherein said period corresponds to one or two subsequent input fields.

**5.** A synchronization signal generator in accordance with claim 3, wherein said period corresponds to ten subsequent input fields.

**6.** A synchronization signal generator in accordance with claim 3, wherein said number of subsequent input images is pre-set such that a period (t0) of said number of subsequent input images according to said input timing standard corresponds to a period (t0) of an integral number of subsequent output images according to said output timing standard.

**7.** A synchronization signal generator in accordance with any of claims 1 to 6, wherein said timing adjustment circuit (620, 720, 810) adjusts the timing of generated synchronization signals (602, 802) of a current output image.

**8.** A synchronization signal generator in accordance with claim 6, wherein said timing adjustment circuit (620, 720, 810) adjusts the timing of generated synchronization signals (602, 802) of a sequence of output images, wherein the number of images of said sequence is pre-set such that a period (t0) of said sequence in accordance with said output timing standard corresponds to said period (t0) of said pre-set number of subsequent input images.

**9.** A synchronization signal generator in accordance with claim 8, wherein said timing adjustment circuit (620, 720, 810) increases the number of generated horizontal synchronization signals of the last image of said sequence of output images in response to the number of counted pixels being higher than designated by said input timing standard.

**10.** A synchronization signal generator in accordance with claim 8, wherein said timing adjustment circuit (620, 720, 810) decreases the number of generated horizontal synchronization signals of the last image of said sequence of output images in response to the number of counted pixels being lower than designated by said input timing standard.

**11.** A synchronization signal generator in accordance with claim 8, wherein said timing adjustment circuit (620, 720, 810) distributes a deviation in the number of counted pixels by adjusting the number of generated horizontal synchronization signals in all images of said sequence of output images.

**12.** A synchronization signal generator in accordance with claim 11, wherein said timing adjustment circuit (620, 720, 810) further adjusts the time interval between successively generated horizontal synchronization signals for all lines of said sequence of output images.

**13.** A synchronization signal generator in accordance with any of claims 8 to 12, wherein said timing adjustment circuit (620, 720, 810) completely introduces a deviation (Δt10, Δt20, Δt30) detected for said pre-set number of input images into a current or a following sequence of output images.

**14.** A synchronization signal generator in accordance with any of claims 8 to 13, wherein said timing adjustment circuit (620, 720, 810) further generates a sequence position signal indicating a current image position with respect to a sequence of output images.

**15.** A synchronization signal generator in accordance with any of claims 1 to 14, wherein said timing adjustment circuit (720, 810) determines the temporal position of said generated synchronization signals (602, 802) in accordance with a second pixel clock signal.

**16.** A synchronization signal generator in accordance with any of claims 1 to 15, wherein said timing adjustment circuit (620, 720, 810) determines a number of lines per field or frame in order to control the synchronization signal generation.

**17.** A synchronization signal generator in accordance with any of claims 1 to 16, wherein said timing adjustment circuit (620, 720, 810) determines a number of pixels per line in order to control the synchronization signal generation.

**18.** A synchronization signal generator in accordance with any of claims 8 to 17, wherein said timing adjustment circuit (620, 720, 810) selects an adjustment operation out of the following predefined operations of:
(i) introducing a detected deviation to the last image of a sequence of output images by adjusting the number of lines thereof, adding remaining pixels to the last line,
(ii) distributing a detected deviation among all images of a sequence of output images by adjusting the number of lines of all said images, adding remaining pixels to the last line of the last image, or
(iii) distributing a detected deviation among all images of a sequence of output images by adjusting the number of lines of all said images and distributing a remaining amount of pixels among all lines of all said images, adding surplus pixels to the last line of the last image.

**19.** A synchronization signal generator in accordance with claim 18, wherein said adjustment operation is selected based on the magnitude and/or direction of the deviation.

**20.** A synchronization signal generator in accordance with claim 19, wherein said adjustment operation is selected such that a deviation between the timing of said generated synchronization signals and said output timing standard does not exceed a predefined deviation range.

**21.** A synchronization signal generator in accordance with claim 18, wherein said timing adjustment circuit (620, 720, 810) evaluates the type and time of received synchronization signals in order to select said adjustment operation.

**22.** A video conversion circuit for subjecting a video signal to a temporal frame rate conversion, comprising the synchronization signal generator in accordance with any of claims 1 to 21.

**23.** A method for generating synchronization signals according to a predefined output timing standard based on received synchronization signals, wherein said received synchronization signals and said generated synchronization signals include horizontal and vertical video synchronization signals, comprising the step of adjusting (s200) the timing of said generated synchronization signals, **characterized by**
detecting (s100) deviations of the timing of said received synchronization signals from a predefined input timing standard, and
in that said adjusting step (s200) adjusts the timing of said generated synchronization signals based on said deviations of the timing of said received synchronization signals from said predefined input timing standard detected by said detection step (s100).

**24.** A method in accordance with claim 23, wherein said detection step (s100) comprises the step of counting (s110) a first pixel clock signal in order to measure time periods between received synchronization signals in units of pixel clock count values.

**25.** A method in accordance with claim 24, wherein said detection step (s100) further comprises the step of resetting (s120) a count value of said first pixel clock signal upon receiving a specific synchronization signal.

**26.** A method in accordance with claim 25, wherein said number of pixels is counted for a period of a predefined number of subsequent input images.

**27.** A method in accordance with claim 26, wherein said period corresponds to one or two subsequent input fields.

**28.** A method in accordance with claim 26, wherein said period corresponds to ten subsequent input fields.

**29.** A method in accordance with claim 26, wherein said number of subsequent input images is pre-set such that a period (t0) of said predefined number of subsequent input images according to said input timing standard corresponds to a period (t0) of an integral number of subsequent output images according to said output timing standard.

**30.** A method in accordance with any of claims 23 to 29, wherein said step of adjusting (s200) the timing adjusts the timing of generated synchronization signals (602, 802) of a current output image.

**31.** A method in accordance with claim 29, wherein said step of adjusting (s200) the timing adjusts the timing of generated synchronization signals of a sequence of output images, wherein the number of images of said sequence is pre-set such that a period (t0) of said sequence in accordance with said output timing standard corresponds to said period (t0) of said pre-set number of subsequent input images.

**32.** A method in accordance with claim 31, wherein said step of adjusting (s200) the timing adjusts (s230a) the number of generated horizontal synchronization signals of the last image of said sequence of output images in response to the number of counted pixels differing from said input timing standard.

**33.** A method in accordance with claim 31, wherein said step of adjusting (s200) the timing distributes (s230b) a deviation in the number of counted pixels by adjusting the number of generated horizontal synchronization signals in all images of said sequence of output images.

**34.** A method in accordance with claim 33, wherein said step of adjusting (s200) the timing further adjusts the time interval between successively generated horizontal synchronization signals for all lines of said sequence of output images.

**35.** A method in accordance with any of claims 31 to 34, wherein said step of adjusting (s200) the timing completely introduces a deviation (Δt10, Δt20, Δt30) detected for said pre-set number of input images into a current or a following sequence of output images.

**36.** A method in accordance with any of claims 31 to 35, further comprising the step of generating a sequence position signal indicating a current image position with respect to a sequence of output images.

**37.** A method in accordance with any of claims 23 to 36, wherein said step of adjusting (s200) the timing determines the temporal position of said output synchronization signals in accordance with a second pixel clock signal.

**38.** A method in accordance with any of claims 23 to 37, wherein said step of adjusting (s200) the timing determines a number of lines per field or frame in order to control the synchronization signal generation.

**39.** A method in accordance with any of claims 23 to 38, wherein said step of adjusting (s200) the timing determines a number of pixels per line in order to control the synchronization signal generation.

**40.** A method in accordance with any of claims 31 to 39, wherein said step of adjusting (s200) the timing includes the step of selecting (s220) an adjustment operation out of the following predefined operations of:
(i) introducing (s230a) a detected deviation to the last image of a sequence of output images by adjusting the number of lines thereof, adding remaining pixels to the last line,
(ii) distributing (s230b) a detected deviation among all images of a sequence of output images by adjusting the number of lines of all said images, adding remaining pixels to the last line of the last image, or
(iii) distributing (s230c) a detected deviation among all images of a sequence of output images by adjusting the number of lines of all said images and distributing a remaining amount of pixels among all lines of all said images, adding surplus pixels to the last line of the last image.

**41.** A method in accordance with claim 40, wherein said adjustment operation is selected based on the magnitude and/or direction of the deviation.

**42.** A method in accordance with claim 41, wherein said adjustment operation is selected such that a deviation between the timing of said generated synchronization signals and said output timing standard does not exceed a predefined deviation range.

**43.** A method in accordance with claim 40, wherein said step of adjusting (s200) the timing further comprises the step of evaluating the type and time of received synchronization signals in order to select an adjustment operation.

**44.** A method for subjecting a video signal to a temporal frame rate conversion, comprising the method for generating synchronization signals in accordance with any of claims 23 to 43.
